# EUROPEAN PATENT APPLICATION

(11) **EP 4 749 187 A1**
(43) Date of publication of application: **27.05.2026**
(21) Application number: 25217458.6
(22) Date of filing: 20.11.2025
(51) Int. Cl.: F23R 3/00

(54) **SINGLE WALL VASCULAR COOLED COMBUSTOR LINER**

(30) Priority: 20.11.2024 US 202463722905 P
(71) Applicant: RTX Corporation, Farmington, CT 06032 (US)
(72) Inventor: BRADSHAW, Sean, White Plains 10603 (US); MONGILLO, JR, Dominic, West Hartford 06107 (US); PROPHETER-HINCKLEY, Tracy, Rocky Hill 06067 (US); BINEK, Lawrence, Glastonbury 06033 (US)
(74) Representative: Dehns

(57) **Abstract**

A combustor liner (100; 100-1, 100-2; 200-1; 300-1) for a combustor (56) is disposed about an axis (A) in a gas turbine engine (20) having an engine axis (A). The combustor liner (100...300-1) includes a first wall (106; 206; 306) comprising a first opening (110; 210; 310) therethrough, the first opening (110; 210; 310) configured to receive a cooling fluid, a second wall (108; 208; 308) spaced from the first wall (106; 206; 306), the second wall (108; 208; 308) configured to define a portion of a combustion chamber (104) and comprising a second opening (112; 212; 312), the second opening (112; 212; 312) configured to discharge the cooling fluid, a lattice structure (134; 234; 334) disposed between the first wall (106; 206; 306) and the second wall (108; 208; 308), a flow guide (116; 216; 316) defining a portion of the first opening (110; 210; 310) and connecting the first wall (106; 206; 306) to the second wall (108; 208; 308).

## Description

### TECHNICAL FIELD

The present disclosure generally relates to gas turbine engines and, more particularly, relates to combustor components for gas turbine engines.

### BACKGROUND

Impingement film floatwall combustor cooling schemes having double wall configurations generally demonstrate high overall cooling effectiveness, permitting the efficient redistribution of compressor outlet air flow for reducing NOx emissions and tailoring the combustor exit temperature distribution consistent with turbine life requirements. However, engine operation in CMAS-laden environments combined with impingement cooling features within the impingement film floatwall configuration yields backside liner deposits of dirt that reduce the overall cooling effectiveness, resulting in increased liner panel temperatures relative to design intent. Improved combustor liner designs are needed that provide efficient film cooling and reduce or substantially eliminate dirt accumulation on the backside of the liner in CMAS-laden environments.

### SUMMARY

In one aspect of the present invention, a combustor liner for a combustor is disposed about an axis in a gas turbine engine having an engine axis. The combustor liner includes a first wall comprising a first opening therethrough, the first opening configured to receive a cooling fluid, a second wall spaced from the first wall, the second wall configured to define a portion of a combustion chamber and comprising a second opening, the second opening configured to discharge the cooling fluid, a lattice structure disposed between the first wall and the second wall and a flow guide defining a portion of the opening and connecting the first wall to the second wall.

In another aspect of the present invention, a gas turbine engine includes a casing and a combustor mounted in the casing and separated from the casing by a plenum. The combustor includes the combustor liner that includes a first wall comprising a first opening therethrough, the first opening configured to receive a cooling fluid from the plenum, a second wall spaced from the first wall, the second wall configured to define a portion of a combustion chamber and comprising a second opening, the second opening configured to discharge the cooling fluid, a lattice structure disposed between the first wall and the second wall, a flow guide defining a portion of the opening and connecting the first wall to the second wall.

The present summary is provided only by way of example, and not limitation. Other aspects of the present disclosure will be appreciated in view of the entirety of the present disclosure, including the entire text, claims and accompanying figures.

### BRIEF DESCRIPTION OF THE DRAWINGS

FIG. 1 is a schematic partial cross-sectional view of a gas turbine engine.
FIG. 2 is a schematic cross-sectional view of a combustor section of the gas turbine engine of FIG. 1.
FIG. 3 is a schematic perspective view of a combustor liner according to one embodiment of the present disclosure.
FIG. 4 is a schematic perspective view of an internal lattice structure of the combustor liner of FIG. 3.
FIG. 5 is a schematic perspective view of a combustor liner having a plurality of cooling plenums.
FIG. 6 is a schematic perspective view of a portion of the combustor liner of FIG. 5.

FIG. 7 is a schematic perspective view of a combustor liner according to another embodiment of the present disclosure.

While the above-identified figures set forth embodiments of the present invention, other embodiments are also contemplated, as noted in the discussion. In all cases, this disclosure presents the invention by way of representation and not limitation. It should be understood that numerous other modifications and embodiments can be devised by those skilled in the art, which fall within the scope and spirit of the principles of the invention. The figures may not be drawn to scale, and applications and embodiments of the present invention may include features, steps and/or components not specifically shown in the drawings.

### DETAILED DESCRIPTION

This disclosure presents a combustor liner consisting of a single wall structure that replaces impingement cooling shells of current combustor designs with flow guides that smoothly direct a cooling fluid through a plenum of the combustor liner. The features of the disclosed combustor liner effectively mitigate dirt accumulation on a backside of a combustor liner (opposite a side exposed to combustion gases). Additionally, vascular cooling passages increase cooling surface area and augment convection heat transfer between the combustor liner and cooling fluid. Finally, effusion film cooling flow that emerges from the vascular cooling passages provides a more evenly distributed layer of air insulation, protecting the hot side of the combustor panel from high temperature combustion products.

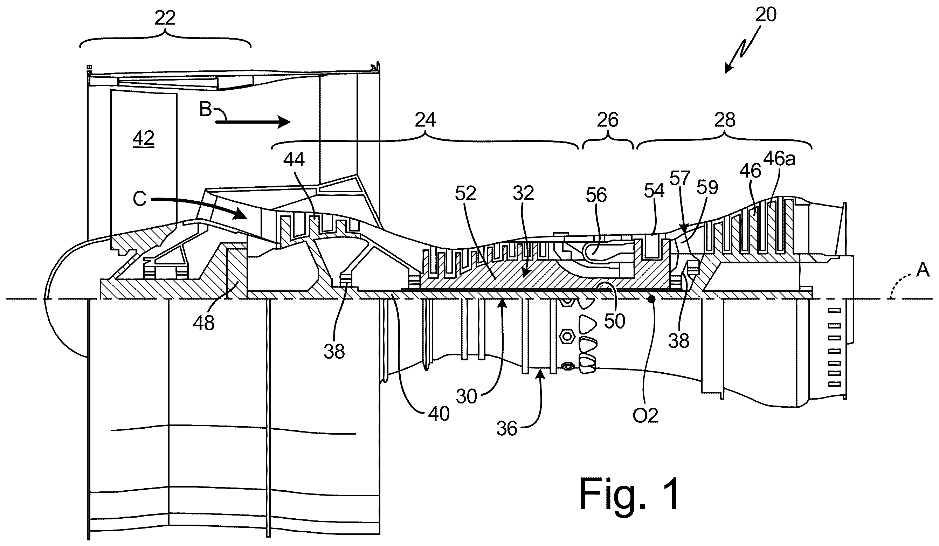

FIG. 1 is a schematic, partial cross-sectional view of a representative gas turbine engine 20. Gas turbine engine 20 is disclosed herein as a two-spool turbofan that generally incorporates a fan section 22, a compressor section 24, a combustor section 26, and a turbine section 28. Alternative engines might include other systems or features. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low-speed spool 30 and a high-speed spool 32 mounted for rotation about an engine central longitudinal axis A (engine centerline) relative to an engine static structure 36 via several bearing systems 38. It should be understood that various bearing systems 38 at various locations may alternatively or additionally be provided, and the location of bearing systems 38 may be varied as appropriate to the application. The low-speed spool 30 generally includes an inner shaft 40 that interconnects a fan 42, a first or low-pressure compressor 44 and a first or low-pressure turbine 46. The inner shaft 40 is connected to the fan 42 through a speed change mechanism, which in exemplary gas turbine engine 20 is illustrated as a geared architecture 48 to drive the fan 42 at a lower speed than the low-speed spool 30. The high-speed spool 32 includes an outer shaft 50 that interconnects a second or high-pressure compressor 52 and a second or high-pressure turbine 54. A combustor 56 is arranged in exemplary gas turbine 20 between the high-pressure compressor 52 and the high-pressure turbine 54. A mid-turbine frame 57 of the engine static structure 36 is arranged generally between the high-pressure turbine 54 and the low-pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A (engine centerline) which is collinear with their longitudinal axes.

The core airflow is compressed by the low-pressure compressor 44 then the high-pressure compressor 52, mixed and burned with fuel in the combustor 56, then expanded over the high-pressure turbine 54 and low-pressure turbine 46. The mid-turbine frame 57 includes airfoils 59 which are in the core airflow path C. The turbines 46, 54 rotationally drive the respective low speed spool 30 and high-speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

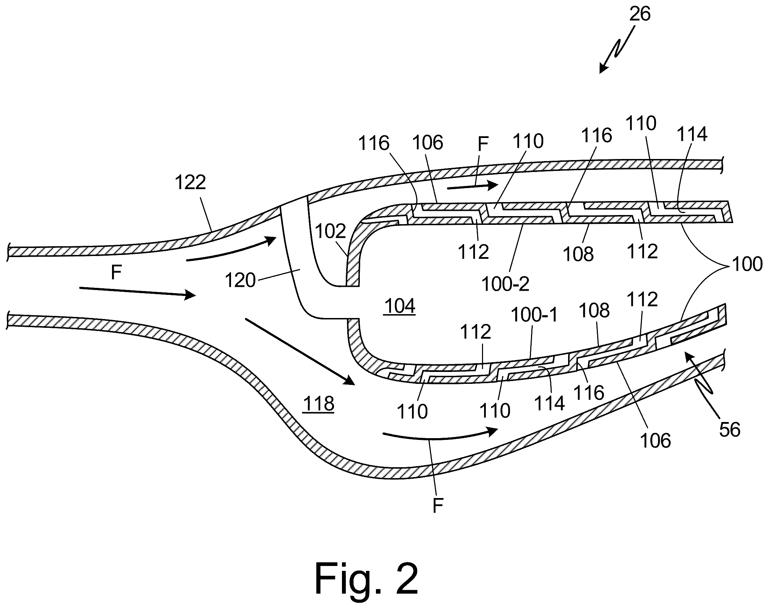

FIG. 2 is a schematic cross-sectional view of combustor section 26 and combustor 56 according to one embodiment of the present disclosure. FIG. 2 shows combustor 56, combustor liners 100 (including inner diameter combustor liners 100-1 and outer diameter combustor liners 100-2), combustor bulkhead 102, combustion chamber 104, first walls 106, second walls 108, first openings 110, second openings 112, combustor liner plenums 114, flow guides 116, plenum 118, fuel injector 120, casing 122, and air flow F. Combustor 56 can be mounted in casing 122 and separated from casing by plenum 118. Casing 122 can be a diffuser casing configured to receive an air flow from a compressor section of the gas turbine engine. The direction of air flow F through plenum 118 is shown by arrows. Combustor liners 100 and combustor bulkhead 102 can define combustor chamber 104. Combustor 56 can be an annular combustor as illustrated. In other embodiments, combustor 56 can be a can combustor or cannular combustor. Fuel injector 120 can interface with combustor bulkhead 102 as known in the art.

Combustor 56 can include a plurality of combustor liners 100. Inner diameter combustor liners 100-1 can define an inner diameter of combustion chamber 104. Outer diameter combustor liners 100-2 can define an outer diameter of combustion chamber 104. Each of the inner diameter and the outer diameter of combustion chamber 104 can be defined by a plurality of inner diameter combustor liners 100-1 and outer diameter combustor liners 100-2, respectively. A plurality of inner diameter combustor liners 100-1 can be arranged circumferentially in one or more circumferential rows. A plurality of outer diameter combustor liners 100-2 can be arranged circumferentially in one or more circumferential rows. Adjacent combustor liners 100 can be joined by any suitable mechanism, including, for example, bolts or other mechanical fasteners or retention features, to form a continuous flow path surface for combustion gases in combustion chamber 104.

Each combustor liner 100 includes first wall 106 and second wall 108, first openings 110, second openings 112, plenum 114, and flow guides 116. First wall 106 is a "cold side" wall. Second wall 108 is a "hot side" wall. First wall 106 is disposed external to second wall 108 and includes an exterior surface that faces plenum 118. Second wall 108 is disposed internal to first wall 106 and has an exterior surface that faces combustion chamber 104. First wall 106 and second wall 108 are connected by a plurality of flow guides 116. A plurality of first openings 110 are provided through first wall 106. A plurality of second openings 112 are provided through second wall 108. Plenums 114 provided between first wall 106 and second wall 108 and connect first openings 110 and second openings 112. First openings 110 are configured to convey cooling fluid (air flow F) from plenum 118 to plenums 114 of combustor liners 100. Second openings 112 are configured to convey cooling fluid (air flow F) from plenums 114 to the exterior surface of second wall 108 to provide effusion film cooling of second wall 108 in combustion chamber 104. Plenums 114 can include cooling features (not shown) connecting first wall 106 to second wall 108 as described further herein.

Combustor liners 100 can additionally include a plurality of dilution holes (not show) configured to direct air flow F from plenum 118 to combustion chamber 104 as known in the art. Combustor bulkhead 102 can include a cooling circuit (not shown) similar to that of combustor panels 100 or other cooling configurations know in the art. Combustor bulkhead 102 can include a plurality of combustor liners, which can be coupled to combustor liners 100.

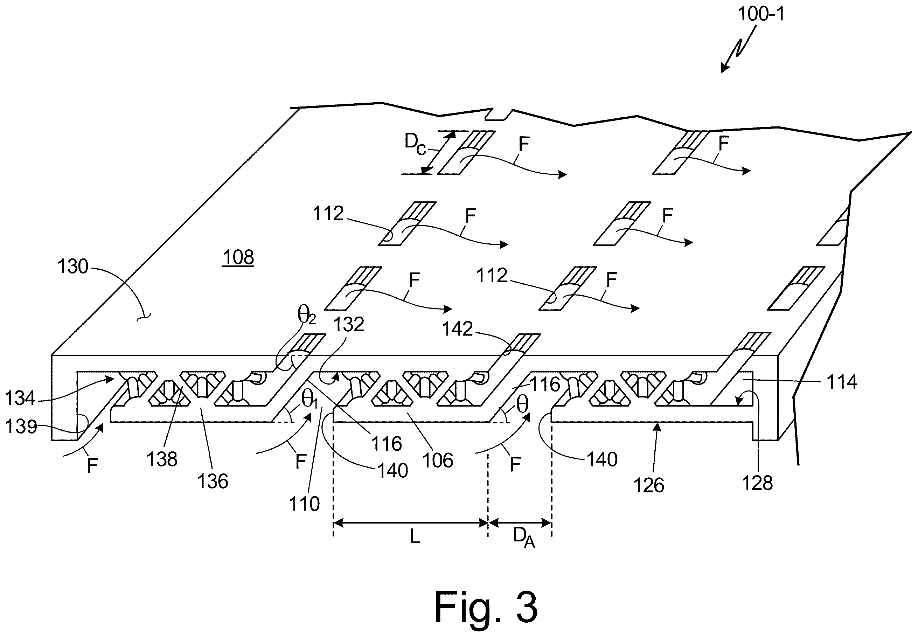

Combustor liners 100 can be formed from any material suitable for high-temperature operation, including, for example, nickel-based alloys as known in the art. An external surface (130, shown in FIG. 3) of second wall 108 can be coated with environmental and/or thermal barrier coating systems suitable for high-temperature operation and CMAS-laden environments as known in the art.

FIG. 3 is a perspective view of combustor liner 100 and, specifically, inner diameter combustor liner 100-1 according to one embodiment of the present disclosure. Outer diameter combustor liner 100-2 can be substantially similar to inner diameter combustor liner 100-1. It will be understood by one of ordinary skill in the art that the features described with respect to inner diameter combustor liner 100-1 can be applied to outer combustor liner 100-2 although not explicitly discussed herein in relation to outer diameter combustor liner 100-2.

FIG. 3 shows first wall 106 with external surface 126 and internal surface 128, second wall 108 with external surface 130 and internal surface 132, first openings 110, second openings 112, plenums 114, flow guides 116, lattice structures 134, nodes 136, rods 138, end wall 139, end 140, end 142, length L, circumferential dimension D_{C}, axial dimension D_{A}, angle θ, and air flow F.

As previously described, first wall 106 is configured to be disposed in plenum 118 (shown in FIG. 2) with external surface 126 open to plenum 118 and interfacing with fluid in plenum 118. Internal surface 128 is opposite external surface 126 and faces internal surface 132 of second wall 108. As previously discussed, second wall 108 is a hot side wall with external surface 130 configured to define an outer boundary of combustion chamber 104 (shown in FIG. 2). External surface 130 is opposite internal surface 132. First wall 106 can be disposed parallel to second wall 108. Internal surfaces 128 and 132 of first wall 106 and second wall 108 are spaced apart to define a plurality of plenums 114. A plurality of lattice structures 134 are disposed in the plurality of plenums 114. Lattice structures are disposed between each of internal surfaces 128 and 132 of first wall 106 and second wall 108, respectively, and can be connected to one or both of internal surfaces 128 and 132 of first wall 106 and second wall 108, respectively. First wall 106 is connected to second wall 108 by a plurality of flow guides 116.

Combustor liner 100-1 extends an axial length with respect to engine axis A (shown in FIG. 1) from a forward to aft direction, represented by air flow F arrows oriented in forward (upstream) to aft (downstream) direction. Air flow F enters combustor liner 100-1 from plenum 118 through first openings 110 of first wall 106. Air flow F passes through plenums 114 in combustor liner 100-1 from first opening 110 toward second opening 112 in second wall 108. Air flow F provides cooling to the backside or internal surface 132 of second wall 108. Air flow F exits combustor liner 100-1 through second openings 112 in second wall 108 as an effusion film cooling fluid, flowing along external surface 130 of second wall 108. A plurality of first openings 110 are provided through first wall 106 and are spaced axially such that air flow F enters combustor liner 100-1 at multiple axial locations. A plurality of second openings 112 are provided through second wall 108 and are spaced axially such that air flow F exits combustor liner 100-1 at multiple axial locations.

Flow guides 116 connect first wall 106 to second wall 108. Flow guides 116 can be solid walls that are angled as discussed further herein. Flow guides 116 define a first axial extent of first openings 110. A second axial extent of first openings 110 can be defined by end 140. Flow guides 116 are configured to smoothly guide air flow F into combustor liner 100-1 to prevent or minimize impingement of air flow F on internal surface 132 of second wall 108 and cause accumulation of dirt. Flow guides 116 are angled from first wall 106 to second wall 108 in a forward to aft direction, guiding air flow F from plenum 118 to plenums 114. Any dirt entrained in air flow F can flow into and through plenums 114 and enter combustion chamber 104 via second openings 112. Flow guides 116 can be disposed at any angle θ suitable for guiding air flow F into plenums 114 without causing air flow F impingement or significantly minimizing air flow F impingement on internal surface 132 of second wall 108. For example, flow guides 116 may extend from first wall 106 at angle θ ranging from 10 degrees to 90 degrees. Although the flow guides 116 are illustratively shown to be predominately parallel with the same angle θ it is essential to recognize that flow guides 116 may vary uniquely in angle θ in both the circumferential and/or axial direction along a circumferential length. Although not depicted, each of the flow guides 116 extending from the first wall 106 and/or from the flow guides 116 extending through the second wall external surface 130 may also have unique θ₁ and θ₂ angles, where θ₁ may define the inlet to plenum 114 and θ₂ the exit of plenum 114. θ₁ is an angle inducive of cooling air onboarding, which can be dependent on plenum 114 geometry, while θ₂ can vary in accordance to the proximity to a flame and expected surface flow environment. θ₁ (not shown) at end wall 139 can be 90 degrees. In a non-limiting embodiment, subsequent flow guides 116 can be oriented with θ₁ having an angle of about 30 degrees.

Flow guides 116 can be disposed between axially adjacent first openings 110 and second openings 112. Flow guides 116 can define a first axial extent of second openings 112. A second axial extent of second openings 112 can be defined by end 142 formed in second wall 108. **In** this manner, each flow guide 116 can define an opening to a first plenum 114 and an exit of a second plenum disposed adjacent to but axially separated from the first plenum.

Plenums 114 are defined between a pair of flow guides 116. Plenums 114 can extend axially a length L from end 140 of first wall 106 to end 142 or second opening 112 of second wall 108. Length L can be selected to reduce a pressure drop across plenum 114. In a non-limiting example, plenums 114 can have a length not exceeding 1 inch (2.54 cm).

In one embodiment, flow guides 116 and first openings 110 can extend circumferentially through or across a full circumferential extent (not shown) of combustor liner 100-1. In other embodiments, as discussed further herein, flow guides 116 and first openings 110 can extend a partial circumferential length of combustor liner 100-1 and a plurality of flow guides 116 and first openings 110 can be arranged in a plurality of circumferentially extending rows.

First openings 110 can be rectangular slots having a circumferential dimension (not shown) greater than an axial dimension D_{A}. The axial dimension D_{A} of first openings 110 can be selected to provide a desired air flow F through combustor liner 100-1, while preventing or substantially minimizing impingement of air flow F on internal surface 232 of second wall 208.

A plurality of second openings 112 are provided through second wall 108. Second openings 112 can be spaced circumferentially and axially. Second openings 112 can be arranged in a plurality of circumferentially-extending rows with each row including multiple second openings 112. Second openings 112 in one row can be circumferentially offset from second openings 112 in an adjacent row to ensure that film cooling provided by air flow F fully covers exterior surface 130 of second wall 108 to reduce hot spot formation along second wall 108. Second openings 112 can be rectangular or oblong slots having a circumferential dimension D_{C} greater than an axial dimension (not labelled). Second openings 112 can be smaller than first openings 110 with respect to both circumferential and axial dimensions. In some embodiments, second openings 112 can extend a partial length of flow guides 116 and combustor liner 100-1 can include more second openings 112 than first openings 110. In other embodiments, as described further herein, a circumferential dimension D_{C} of second openings 112 can match a circumferential dimension of flow guides 116 and first openings 110. While the slot configuration is preferrable for effusion film cooling, in other examples, second openings 112 may have shapes other than those shown.

In an alternative embodiment the second openings 112 may be of multiple varying circumferential widths, D_{C} and axial heights, D_{A} to optimize the circumferential air flow distribution F along external surface 130 of second wall 108. In a similar manner, the first openings 110 may also be of multiple varying circumferential lengths to optimally tailor inlet cavity area, pressure loss, and internal flow field characteristics to mitigate the propensity for internal dirt deposition or dirt deposition rate.

Lattice structures 134 are disposed in plenums 114 and connect first wall 106 and second wall 108. Lattice structures 134 can extend, for example from an axial location adjacent to end 140 of first wall 106 to an axial location adjacent to end 142 of second wall 108 such that lattice structures 134 generally extend from first opening 110 to second opening 112. Lattice structures 114 can be formed from nodes 136 and rods 138. Nodes 136 can be disposed on each of first wall 106 and second wall 108. Rods 138 can connect nodes 136 on first wall 106 to nodes 136 on second wall 108. Rods 138 can extend at angles forming a lattice-like vascular structure through which air flow F can flow. The size, spacing, and/or density or lattice structures 134 can be selected to provide a desired convection cooling for second wall 108 and to maintain a desired pressure drop across plenum 114 from first opening 110 to second openings 112.

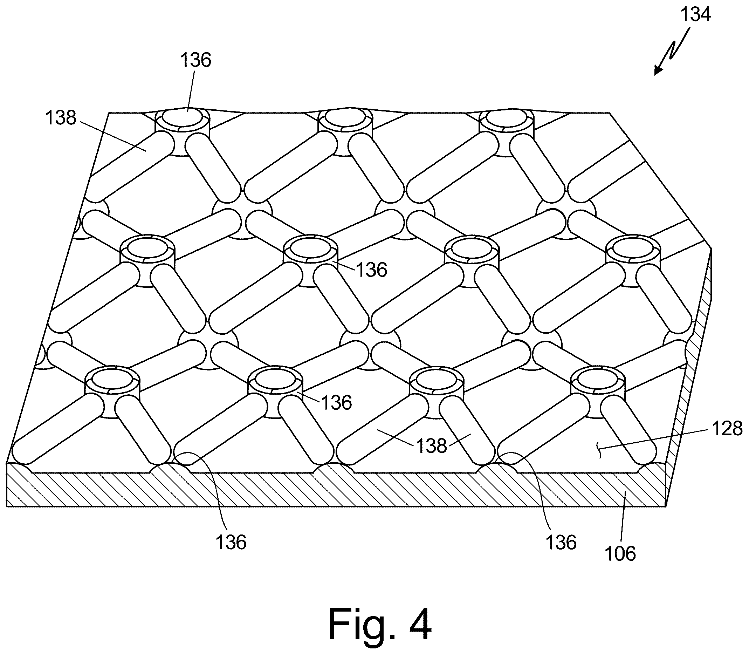

FIG. 4 is a schematic perspective view of one example of lattice structure 134 of combustor liner 100-1. FIG. 4 shows first wall 106 with internal surface 128, lattice structure 134 with nodes 136 and rods 138. Second wall 108 has been removed to show lattice structure 134. Nodes 136 can be, for example, rounded or semi-spherical bodies having a convex shape protruding from each of first wall 106 and second wall 108. Rods 138 can be, for example, cylindrical bodies. In some examples, rods 138 can have an airfoil, teardrop, triangular, or diamond shape oriented to direct flow from first opening 110 to second opening 112. Nodes 136 and rods 138 can be solid bodies. In other examples, one or both nodes 136 and 138 can be hollow bodies to reduce weight of combustor liners 100-1 while still providing convection cooling of second wall 108. Air flow F is directed through openings between adjacent rods 138 of lattice structures 134. In some examples, a surface roughness of nodes 136 and/or rods 138 can be increased relative to internal surfaces 128 and 132 to increase turbulence of air flow F through lattice structures 134 to improve cooling.

Lattice structures 134 can be formed by an additive manufacturing process. Exemplary additive manufacturing processes include laser-powder bed fusion and electron beam powder bed fusion techniques in which the components are formed layer by layer. **In** some examples, combustor liners 100 can be formed via additive manufacturing such that lattice structures 134 are integrally formed with each of first wall 106 and second wall 108. In other examples, lattice structures 134 and flow guides 116 can be integrally formed with one of first wall 106 and second wall 108 and the other of first wall 106 via additive manufacturing and second wall 108 can be subsequently affixed to lattice structures 134 and flow guides 116, for example, via welding, brazing, or other techniques known in the art.

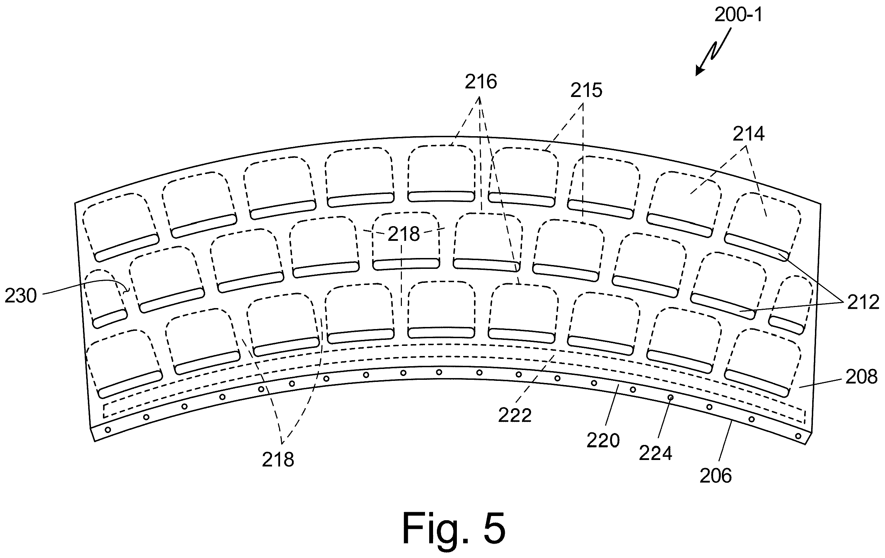

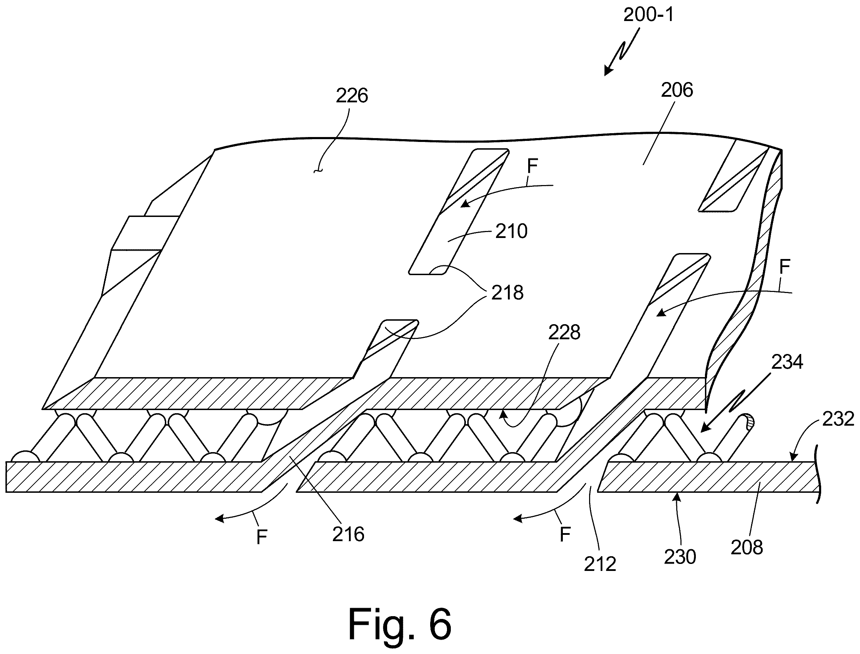

In some embodiments, lattice structures 134 can be provided in a plurality of separate plenums 114. FIG. 5 is a schematic perspective view of a combustor liner having a plurality of plenums for cooling the second wall. FIG. 5 shows inner diameter combustor panel 200-1, first wall 206, second wall 208 with external surface 230, second openings 212, plenums 214 with forward ends 215, flow guides 216, plenum walls 218, end wall 220, plenum 222, and cooling holes 224. FIG. 6 is a schematic perspective view of a portion of combustor liner 200-1 of FIG. 5. FIG. 6 shows first wall 206 with external surface 226 and internal surface 228, second wall 208 with external surface 230 and internal surface 232, first openings 210, second openings 212, flow guides 216, plenum walls 218, lattice structure 234, and air flow F. FIGS. 5 and 6 are discussed together herein.

Combustor liner 200-1 can be the same as or substantially similar to inner diameter combustor liner 100-1 of FIG. 3, which may or may not include plenum walls 218. Reference characters are increased by 100 to identify corresponding features.

Plenum walls 218 can extend axially. A plurality of plenum walls 218 can be spaced circumferentially to divide combustor liner 200-1 into a plurality of circumferentially arranged plenums 214. The plurality of predominately circumferentially arranged plenums 214 can be arranged in a plurality of circumferentially extending rows, with each row including a plurality of plenums 214.

Each plenum 214 can extend from flow guide 216 (shown in phantom in FIG. 5) defining a forward end 215 (shown in phantom) of plenum 214 to second opening 212 through second wall 208. Forward end 215 of each plenum 214 can radially overlap first opening 210 (shown in FIG. 6). Flow guides 216 are disposed between adjacent first openings 210 and second openings 212 as previously disclosed. Together, flow guides 216 can form a circumferentially-extending wall separating circumferential rows of plenums 214. As previously described, flow guides 216 are angled to direct air flow F through plenums 214 and out second opening 212 without impinging on the interior surface 230 (shown in FIG. 6) of second wall 208.

Plenum walls 218 extend between circumferentially adjacent plenums 214 and can connect flow guides 216 disposed at opposite ends of the circumferentially adjacent plenums 214. Plenum walls 218 can be solid walls configured to control air flow F through combustor liner 200-1. While plenums 214 shown in FIG. 5 are shown to be generally the same size, in some embodiments, the size and/or shape of plenums 214 can be varied to tailor cooling of combustor liner 200-1 to meet varying cooling demands (i.e., direct additional cooling air flow F to areas susceptible to the formation of hot spots). Each plenum 214 can include a lattice structure 234 as previously described. The configuration of lattice structures (e.g., arrangement, shape, and/or density of rods and nodes) can vary in each plenum to more finely tailor delivery of air flow F to meet identified cooling needs, which may vary according to location on combustor liner 200-1.

As previously described, cooling plenums 214 and second openings 212 in one row can be circumferentially offset from cooling plenums 214 and second openings 212 in adjacent rows to ensure that external surface 230 of second wall 208 is substantially covered by film cooling air flow F. While the plenums 214 illustratively depicted effectively have a constant circumferential length D_{C} those skilled in the art will appreciate that plenums 214 may be diverging or converging shaped from the inlet opening 212 to the discharge exits 210. The quantity and distribution of circumferential and streamwise junction nodes 136, as well as the length of the rods 138 may be of varying lengths and diameters to facilitate predominately circumferential and axial streamwise pressure loss, convective heat transfer, and air flow F temperature heat pickup. Similarly, although the inlet feed openings 110 and/or exit openings 112 are illustratively shown to be predominately linear in nature, it is recognized that both inlet feed openings 110 and/or exit openings 112 may be of convex or concave shape to allow for increased circumferential dispersion or coalescing film flow distributions which may be necessary depending on local heat flux and surface area film coverage requirements.

Combustor liner 200-1 can include end wall 220, plenum 222, and cooling holes 224. End wall 220 can connect first wall 206 to second wall 208 and define an aft end of combustor liner 200-1. Plenum 222 can be disposed adjacent to end wall 220. Plenum 222 can extend a length of end wall 220 between a row of plenums 214 and end wall 220. Plenum 222 can receive air flow from one or more openings (not shown) through first wall 206 and can direct air flow through cooling holes 224. A plurality of cooling holes 224 can be longitudinally spaced along end wall 220 and can be configured to provide impingement cooling to walls of adjacent combustor liners (not shown).

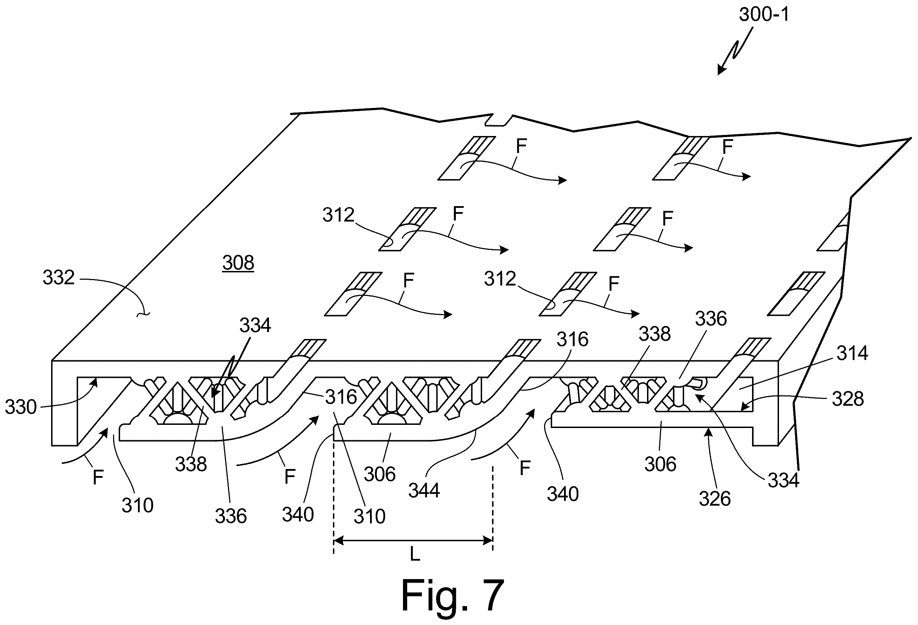

FIG. 7 is a perspective view of a combustor liner according to another embodiment of the present disclosure. FIG. 7 shows inner diameter combustor liner 300-1. FIG. 7 shows first wall 306 with external surface 326 and internal surface 328, second wall 308 with external surface 332 and internal surface 330, first openings 310, second openings 312, plenums 314, flow guides 316, lattice structures 334, nodes 336, rods 338, end 340, transition region 344, and air flow F. Inner diameter combustor liner 300-1 is substantially similar to inner diameter combustor liner 100-1 of FIG. 3 with the exception of the shape of inner wall 306 and flow guides 316 and the configuration of lattice structures 334. Second wall 308 with second openings 312 can be substantially the same as second wall 108 with second openings 112 as described with respect to FIG. 3. The arrangement of plenums 314 can be substantially the same as the arrangement of plenums 114 as described with respect to FIGS. 3 and 5.

In contrast to combustor liner 100-1, first wall 306 is connected to flow guides 316 via transition regions 344. Transition regions 344 are radiused or convexly curved surfaces configured to smoothly transition air flow F along exterior surface 326 into plenums 314 at first openings 310 Transition regions 344 can have any suitable radius of curvature selected to guide air flow F to prevent or minimize impingement of air flow F on interior surface 332 of second wall 308.

In some examples, a depth of plenums 314 or distance between first wall 306 and second wall 308 can be increased to accommodate transition regions 344. In such cases, the orientation and configuration (e.g., shape, length, arrangement, position) of nodes 336 and rods 338 may be adjusted to provide a desired air flow F through plenums 314.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

Any relative terms or terms of degree used herein, such as "substantially", "essentially", "generally", "approximately" and the like, should be interpreted in accordance with and subject to any applicable definitions or limits expressly stated herein. In all instances, any relative terms or terms of degree used herein should be interpreted to broadly encompass any relevant disclosed embodiments as well as such ranges or variations as would be understood by a person of ordinary skill in the art in view of the entirety of the present disclosure, such as to encompass ordinary manufacturing tolerance variations, incidental alignment variations, transient alignment or shape variations induced by thermal, rotational or vibrational operational conditions, and the like. Moreover, any relative terms or terms of degree used herein should be interpreted to encompass a range that expressly includes the designated quality, characteristic, parameter or value, without variation, as if no qualifying relative term or term of degree were utilized in the given disclosure or recitation.

### Discussion of Possible Embodiments

The following are non-exclusive descriptions of possible embodiments of the present invention.

In one aspect, a combustor liner for a combustor is disposed about an axis in a gas turbine engine having an engine axis. The combustor liner includes a first wall comprising a first opening therethrough, the first opening configured to receive a cooling fluid, a second wall spaced from the first wall, the second wall configured to define a portion of a combustion chamber and comprising a second opening, the second opening configured to discharge the cooling fluid, a lattice structure disposed between the first wall and the second wall, a flow guide defining a portion of the opening and connecting the first wall to the second wall.

The combustor liner of the preceding paragraph can optionally include, additionally and/or alternatively, any one or more of the following features, configurations, and/or additional components:
In an embodiment of the combustor liner of the preceding paragraphs, the lattice structure can extend between the first opening and the second opening.

In an embodiment of the combustor liner of any of the preceding paragraphs, the lattice structure can include a plurality of nodes disposed on each of the first wall and the second wall and a plurality of rods connecting the plurality of nodes.

In an embodiment of the combustor liner of any of the preceding paragraphs, the first opening can be a slot extending circumferentially with respect to the axis.

An embodiment of the combustor liner of any of the preceding paragraphs can further include a plurality of first openings, the plurality of first openings arranged in a plurality of rows extending circumferentially with respect to the axis, wherein each row comprises a plurality of first openings.

In an embodiment of the combustor liner of any of the preceding paragraphs, the second opening can be a slot extending circumferentially with respect to the axis.

An embodiment of the combustor liner of any of the preceding paragraphs can further include a plurality of second openings, wherein second openings of the plurality of second openings are spaced axially.

In an embodiment of the combustor liner of any of the preceding paragraphs, the flow guide can include an angled wall extending between the first wall and the second wall.

In an embodiment of the combustor liner of any of the preceding paragraphs, the flow guide can further include a curved transition surface connecting the first wall to the angled wall.

In an embodiment of the combustor liner of any of the preceding paragraphs, the angled wall can be angled toward the second wall in a forward to aft direction with respect to a flow direction of the cooling fluid.

An embodiment of the combustor liner of any of the preceding paragraphs can further include a plurality of flow guides spaced along the axis and defining a plurality of first openings, a plurality of second openings arranged in a plurality of rows extending circumferentially with respect to the axis, and a plurality of lattice structures arranged in a plurality of rows extending circumferentially with respect to the axis.

An embodiment of the combustor liner of any of the preceding paragraphs can further include a plurality of circumferentially spaced plenum walls connecting the first wall to the second wall, and a plurality of cooling plenums. Each cooling plenum can be defined between a first opening, a second opening, and a pair of plenum walls. The plurality of cooling plenums can be arranged in a row extending circumferentially with respect to the axis.

In an embodiment of the combustor liner of any of the preceding paragraphs, the plurality of cooling plenums can be arranged in a plurality of rows extending circumferentially with respect to the axis.

In an embodiment of the combustor liner of any of the preceding paragraphs, second openings of one row of the plurality of rows of second openings can be circumferentially offset from second openings of another, adjacent, row of the plurality of rows of second openings.

In an embodiment of the combustor liner of any of the preceding paragraphs, the plurality flow guides can be disposed immediately between the plurality of first openings and the plurality of second openings.

In an embodiment of the combustor liner of any of the preceding paragraphs, exterior surfaces of the lattice structure can have a surface roughness exceeding a surface roughness of an exterior surface of the first wall.

In an embodiment of the combustor liner of any of the preceding paragraphs, the first wall, the second wall, the flow guide, and the lattice structure can be integrally formed by an additive manufacturing process.

In another aspect, a gas turbine engine includes a casing and a combustor mounted in the casing and separated from the casing by a plenum. The combustor includes the combustor liner that includes a first wall comprising a first opening therethrough, the first opening configured to receive a cooling fluid from the plenum, a second wall spaced from the first wall, the second wall configured to define a portion of a combustion chamber and comprising a second opening, the second opening configured to discharge the cooling fluid, a lattice structure disposed between the first wall and the second wall, a flow guide defining a portion of the opening and connecting the first wall to the second wall.

The gas turbine engine of the preceding paragraph can further include a plurality of the combustor liners, the plurality of the combustor liners collectively defining the combustion chamber.

## Claims

1. A combustor liner (100; 100-1, 100-2; 200-1; 300-1) for a combustor (56) disposed about an axis (A) in a gas turbine engine (20) having an engine axis (A), the combustor liner (100...300-1) comprising:
a first wall (106; 206; 306) comprising a first opening (110; 210; 310) therethrough, the first opening (110; 210; 310) configured to receive a cooling fluid;
a second wall (108; 208; 308) spaced from the first wall (106; 206; 306), the second wall (108; 208; 308) configured to define a portion of a combustion chamber (104) and comprising a second opening (112; 212; 312), the second opening (112; 212; 312) configured to discharge the cooling fluid;
a lattice structure (134; 234; 334) disposed between the first wall (106; 206; 306) and the second wall (108; 208; 308); and
a flow guide (116; 216; 316) defining a portion of the first opening (110; 210; 310) and connecting the first wall (106; 206; 306) to the second wall (108; 208; 308).

2. The combustor liner (100...300-1) of claim 1, wherein the lattice structure (134; 234; 334) extends between the first opening (110; 210; 310) and the second opening (112; 212; 312).

3. The combustor liner (100...300-1) of claim 1 or 2, wherein the lattice structure (134; 234; 334) comprises a plurality of nodes (136; 336) disposed on each of the first wall (106; 206; 306) and the second wall (108; 208; 308) and a plurality of rods (138; 338) connecting the plurality of nodes (136; 336).

4. The combustor liner (100...300-1) of claim 1, 2 or 3, wherein the first opening (110; 210; 310) is a slot extending circumferentially with respect to the axis (A), and/or wherein the second opening (112; 212; 312) is a slot extending circumferentially with respect to the axis (A)..

5. The combustor liner (100...300-1) of any preceding claim, wherein the flow guide (116; 216; 316) comprises an angled wall extending between the first wall (106; 206; 306) and the second wall (108; 208; 308).

6. The combustor liner (100...300-1) of claim 5, wherein the flow guide (116; 216; 316) further comprises a curved transition surface connecting the first wall (106; 206; 306) to the angled wall, and/or wherein the angled wall is angled toward the second wall (108; 208; 308) in a forward to aft direction with respect to a flow direction of the cooling fluid.

7. The combustor liner (100...300-1) of any preceding claim, further comprising a plurality of first openings (110; 210; 310), the plurality of first openings (110; 210; 310) arranged in a plurality of rows extending circumferentially with respect to the axis (A), wherein each row comprises a plurality of first openings (110; 210; 310), and/or
further comprising a plurality of second openings (112; 212; 312), wherein second openings (112; 212; 312) of the plurality of second openings (112; 212; 312) are spaced axially.

8. The combustor liner (100...300-1) of any of claims 1 to 6 and further comprising:
a plurality of flow guides (116; 216; 316) spaced along the axis (A) and defining a plurality of first openings (110; 210; 310);
a plurality of second openings (112; 212; 312) arranged in a plurality of rows extending circumferentially with respect to the axis (A); and
a plurality of lattice structures (134; 234; 334) arranged in a plurality of rows extending circumferentially with respect to the axis (A).

9. The combustor liner (100...300-1) of claim 8 and further comprising:
a plurality of circumferentially spaced plenum walls (218) connecting the first wall (106; 206; 306) to the second wall (108; 208; 308); and
a plurality of cooling plenums (114; 214; 314), each cooling plenum (114; 214; 314) defined between a first opening (110; 210; 310), a second opening (112; 212; 312), and a pair of plenum walls (218), wherein the plurality of cooling plenums (114; 214; 314) is arranged in a row extending circumferentially with respect to the axis (A).

10. The combustor liner (100...300-1) of claim 9, wherein cooling plenums (114; 214; 314) of the plurality of cooling plenums (114; 214; 314) are arranged in a plurality of rows extending circumferentially with respect to the axis (A).

11. The combustor liner (100...300-1) of claim 9 or 10, wherein second openings (112; 212; 312) of one row of the plurality of rows of second openings (112; 212; 312) are circumferentially offset from second openings (112; 212; 312) of another, adjacent, row of the plurality of rows of second openings (112; 212; 312).

12. The combustor liner (100; 101; 200) of claim 9, 10 or 11, wherein flow guides (116; 216; 316) of the plurality flow guides (116; 216; 316) are disposed immediately between the plurality of first openings (110; 210; 310) and the plurality of second openings (112; 212; 312).

13. The combustor liner (100...300-1) of any preceding claim, wherein exterior surfaces of the lattice structure (134; 234; 334) have a surface roughness exceeding a surface roughness of an exterior surface of the first wall (106; 206; 306).

14. The combustor liner (100...300-1) of any preceding claim, wherein the first wall (106; 206; 306), the second wall (108; 208; 308), the flow guide (116; 216; 316), and the lattice structure (134; 234; 334) are integrally formed by an additive manufacturing process.

15. A gas turbine engine (20) comprising:
a casing (122); and
a combustor (56) mounted in the casing (122) and separated from the casing (122) by a plenum (118), the combustor (56) comprising the combustor liner (100...300-1) of any preceding claim, wherein the first opening (110) opens to the plenum (118),
optionally further comprising a plurality of the combustor liners (100...300-1), the plurality of the combustor liners (100...300-1) collectively defining the combustion chamber (104).
